# EUROPÄISCHE PATENTSCHRIFT

(11) **EP 1 800 291 B1**
(45) Veröffentlichungstag und Bekanntmachung des Hinweises auf die Patenterteilung: **05.09.2012**
(21) Anmeldenummer: 05791252.9
(22) Anmeldetag: 28.09.2005
(51) Int. Cl.: G10K 15/02, G10K 11/175

(54) **VORRICHTUNG ZUR AKUSTISCHEN KOMMUNIKATION UND/ODER WAHRNEHMUNG IN EINEM KRAFTFAHRZEUG**
DEVICE FOR THE ACOUSTIC COMMUNICATION AND/OR PERCEPTION IN A MOTOR VEHICLE
DISPOSITIF DE COMMUNICATION ET/OU DE PERCEPTION ACOUSTIQUE DANS UN VEHICULE

(30) Priorität: 04.10.2004 DE 102004048988; 04.10.2004 DE 102004048989
(43) Veröffentlichungstag der Anmeldung: 27.06.2007
(73) Patentinhaber: Volkswagen Aktiengesellschaft, 38440 Wolfsburg (DE)
(72) Erfinder: OPFER, Holger, 30171 Hannover (DE)
(74) Vertreter: Patentanwälte Bressel und Partner
(86) Internationale Anmeldenummer: PCT/EP2005/010632
(87) Internationale Veröffentlichungsnummer: WO 2006/037587

(56) Entgegenhaltungen:
- WO-A-99/12387
- WO-A1-99/11490
- DE-A1- 10 217 778
- DE-A1- 10 339 973
- DE-A1- 19 812 697
- DE-A1- 19 938 171
- DE-A1- 19 943 872
- DE-A1- 19 958 836
- DE-C1- 19 938 158
- US-A1- 2002 027 999
- US-A1- 2002 122 561
- MORTON I: "MERCS FIRST TO GET REVOLUTIONARY SPEAKERS" AUTOMOTIVE ENGINEER, PROFESSIONAL ENGINEERING PUBLISHING, LONDON, GB, Bd. 25, Nr. 10, November 2000 (2000-11), Seite 18, XP000968202 ISSN: 0307-6490

## Beschreibung

Die Erfindung betrifft eine Vorrichtung zur akustischen Kommunikation und/oder Wahrnehmung in einem Kraftfahrzeug.

Lautsprecheranordnungen in einem Kraftfahrzeug sind seit langem bekannt und dienen primär der Abstrahlung von Audiosignalen. Die Audio-Signalquellen sind beispielsweise Radios, CD-, MP3- oder DVD-Player. Darüber hinaus werden die Lautsprecher verstärkt zum Abstrahlen von akustischen Informationen beispielsweise eines Navigationssystems und/oder eines Einparkhilfe-Assistenzsystems und/oder einer Freisprecheinrichtung verwendet.

Herkömmliche Lautsprecher in einem Kraftfahrzeug sind als elektrodynamische Lautsprecher mit Permanentmagneten aufgebaut. Diese sind relativ voluminös und schwer, was aufgrund des begrenzten Bauraums in einem Kraftfahrzeug häufig zu Kompromissen zwischen Einbauort und Abstrahlcharakteristik führt.

Aus der JP 2004 056 564 A ist ein Flächen-Lautsprecher bekannt, der hinter dem Dachhimmel angeordnet ist, so dass hinsichtlich Größe und Form ein größerer Freiheitsgrad besteht.

Aus der WO 99/56498 ist ein akustisches Element bekannt, umfassend mindestens zwei poröse Schichten, die elektrisch leitend oder an einer Seite metallisiert sind. Zwischen den zwei porösen Schichten ist eine isolierte Kunststoffschicht angeordnet, die vorzugsweise zweilagig ausgebildet ist, wobei zwischen den beiden Lagen eine metallische Beschichtung ist, über die die Kunststoffschicht auf ein bestimmtes elektrisches Potential aufladbar ist. An bestimmten Stellen ist die Kunststoffschicht mit den porösen Schichten verbunden. Zwischen zwei solchen Nahtstellen ist ein Luftspalt zwischen den porösen Schichten und der Kunststoffschicht. Durch Anlegen eines Signals an mindestens eine poröse Schicht wird dann die Kunststoffschicht in Schwingung versetzt, wobei vorzugsweise auch die andere poröse Schicht mit dem gegenphasigen Signal beaufschlagt wird. Diese Anordnung stellt einen elektrostatischen Flächen-Lautsprecher dar.

Aus der DE 199 58 836 A1 ist ein Verfahren zur Verbesserung der Kommunikation in einem Fahrzeug bekannt, wobei die Sprachsignale der Insassen eines Fahrzeugs für jeden

Insassen einzeln über ein ihm im Rahmen seines Sitzplatzes zugeordnetes Mikrofon aufgenommen werden, wobei die aufgenommenen Sprachsignale für jeden Insassen getrennt in einer Eingangsstufe verstärkt und zur Startpegelminimierung und Frequenzanpassung gefiltert werden, wobei die verstärkten und gefilterten Sprachsignale jedes einzelnen Insassen zur Aufteilung auf die Ausgangskanäle und damit zur Aufteilung auf die einzelnen Komponenten einer aus Lautsprechern bestehenden Sprachausgabeeinrichtung, in Abhängigkeit der örtlichen Zuordnung des Mikrofons im Fahrzeug, über welches das Sprachsignal aufgenommen wurde und in Abhängigkeit der örtlichen Zuordnung jedes einzelnen Lautsprechers der Sprachausgabeeinrichtung im Fahrzeug, über die das Sprachsignal ausgegeben werden soll, über eine Summier- und Verteilstufe einer für jeden Ausgangskanal individuellen Signalverarbeitung in Form einer Laufzeitkorrektur und einer Pegeldifferenzierung unterzogen wird und die Zuordnung des für jeden Ausgangskanal individuell verarbeiteten Sprachsignals zu den einzelnen Ausgangskanälen und damit zu den einzelnen Lautsprechern der Sprachausgabeeinrichtung über eine Anpassstufe erfolgt, in der über eine Pegelanpassung und eine Frequenzanpassung eine auf jeden Ausgangskanal und damit auf jeden Lautsprecher der Sprachausgabeeinrichtung abgestimmte Anpassung des jeweiligen Sprachsignals an die räumlichen Bedingungen des Fahrzeugs und die gewünschte Lautstärke erfolgt. Die Mikrofone können dabei als Richtmikrofone ausgebildet sein. Weiter wird eine Nutzung als Telefoneinrichtung mit freier Zuordnung der Teilnehmer innerhalb des Fahrzeuges vorgeschlagen. Bei einer Nutzung im Rahmen von Telefonprozessen kann aufgrund der Struktur der Vorrichtung ein Gespräch beispielsweise jedem Platz und damit jedem Insassen zugeordnet werden. Die Wiedergabe kann dabei gesteuert über ausgewählte Lautsprecher erfolgen, so dass auch ausgewählte Insassen des Fahrzeuges am Telefongespräch beteiligt werden können. Gleichzeitig kann das Mithören an bestimmten Plätzen eingeschränkt werden. Das geschieht dadurch, dass das ankommende Signal auf entsprechend ausgewählte Lautsprecher geschaltet und als fiktive bzw. virtuelle Sprachquelle behandelt wird. Das oder die abgehenden Signale werden dem gleichen Prozess unterzogen wie das Signal, welches für die interne Kommunikation genutzt wird. Eine Ausgliederung bestimmter Plätze oder Bereiche sowohl von der Aufnahme- als auch von der Wiedergabeseite kann ebenfalls über die Bedieneinheiten der Steuereinheit eingestellt werden.

Aus der DE 199 38 171 A1 ist ein Verfahren zur Verarbeitung von akustischen Signalen für mindestens eine Position in einem Fahrzeug bekannt, bei dem positionsabhängig unterschiedliche akustische Signale derart gesteuert werden, dass mindestens eine akustische Zone eingerichtet wird, wobei vorzugsweise die akustische Zone eine Hör-Zone, eine Sprech-Zone und/oder eine Ruhe-Zone umfasst. Weiter ist vorzugsweise mindestens ein integriertes Lautsprecher-Mikrofon-System vorgesehen, wobei der Lautsprecher als Richtlautsprecher und das Mikrofon als Richtmikrofon ausgebildet ist.

Aus der gattungsgemäßen DE 199 38 158 C1 ist eine Vorrichtung sowie ein Verfahren zur Kompensation von Verlusten eines akustischen Signals auf einem Übertragungsweg zwischen mindestens einem Sendeort und einem Empfangsort in einem Raum bekannt, bei dem der Übertragungsweg des akustischen Signals bestimmt und anhand des Übertragungsweges mindestens ein Parameter einer zugehörigen Übertragungsfunktion ermittelt wird, und bei dem anhand des ermittelten Parameters der akustische Signalpegel für eine vorgebbare Position im Übertragungsweg gesteuert wird.

Der Erfindung liegt das technische Problem zugrunde, eine Vorrichtung zur akustischen Kommunikation und/oder Wahmehmung in einem Kraftfahrzeug weiter zu verbessern sowie hierfür geeignete Verfahren zur Verfügung zu stellen.

Die Lösung des technischen Problems ergibt sich durch den Gegenstand mit den Merkmalen des Anspruch 1. Weitere vorteilhafte Ausgestaltungen der Erfindung ergeben sich aus den Unteransprüchen.

Hierzu ist der Lautsprecher als Richtlautsprecher ausgebildet. Hierdurch wird erreicht, dass das Übersprechen von dem Lautsprecher zu einem anderen Fahrzeugsitz bereits erheblich minimiert wird. Dies wiederum erhöht die Qualität der akustischen Wahrnehmung beispielsweise von Musik aber auch von Sprachsignalen von anderen Fahrzeugsitzen, so dass aufwendige Laufzeit- und Pegelanpassungen nicht notwendig sind. Unter einem Richtlautsprecher wird dabei eine akustische Quelle verstanden, die in unterschiedliche Raumrichtungen unterschiedlich abstrahlt, wobei die Ausrichtung mit der stärksten Abstrahlung (Hauptkeule) mit einem Winkel von 0° bezeichnet wird. Die Güte eines Richtstrahlers bzw. Richtlautsprechers wird im Allgemeinen durch die flächige Ausdehnung des Strahlers im Vergleich zur Wellenlänge der betrachteten Frequenzen bestimmt. Eine mögliche Definition des erfindungsgemäßen Richtlautsprechers ist, dass für Frequenzen, deren Wellenlänge kleiner als die Ausdehnung des Strahlers vertikal zur Ausrichtung des Strahlers ist, alle Nebenkeulen der Richtcharakteristik oberhalb von 45° abweichend von der Ausrichtung des Strahlers um mindestens -10 dB kleiner sind.

Dabei ist den Fahrzeugsitzen jeweils ein Lautsprecher und ein Mikrofon zugeordnet, die durch eine Steuereinheit ansteuerbar sind so dass eine Kommunikation zwischen einzelnen Fahrzeugsitzen unterstützt wird und andere Fahrzeugsitze aus der Kommunikation ausgeblendet werden.

Dabei wird zwischen zwei Fahrzeugsitzen ein akustischer Kanal eingestellt. Unter akustischem Kanal wird dabei verstanden, dass die von einem Richtmikrofon eines ersten Fahrzeugsitzes aufgenommenen Signale nur über einen Richtlautsprecher eines zweiten Fahrzeugsitzes abgestrahlt werden und umgekehrt.

Zur Realisierung eines akustischen Kanals im Geheim-Modus wird dieser vorzugsweise mittels einer Eingabe aktiviert, wobei dann beim Aufbau des Geheim-Modus die akustischen Signale an einen ersten in dem akustischen Kanal eingebundenen Fahrzeugsitz durch das dem Fahrzeugsitz zugeordnete Richtmikrofon aufgenommen werden, wobei das aufgenommene Signal verstärkt über den zugeordneten Richtlautsprecher abgestrahlt wird und mit einer angepassten Lautstärke über den Richtlautsprecher des anderen in den akustischen Kanal eingebundenen Fahrzeugsitzes abgestrahlt wird. Hierdurch werden die beiden beteiligten Personen zum Flüstern angehalten, da Personen üblicherweise leiser sprechen, falls sie ihre Stimme sehr laut hören. Andererseits passt man sich üblicherweise beim Sprechen der Lautstärke des Kommunikationspartners an, so dass der Gesprächspartner durch die angepasste Lautstärke der Wiedergabe selber zum leise Sprechen angehalten wird. Dabei erfolgt diese Vorgehensweise auch in der anderen Richtung.

Vorzugsweise wird dieses Verfahren solange wiederholt, bis die Ausgangspegel an den Richtlautsprechern des akustischen Kanals in einem bestimmten Verhältnis zu einem erfassten und/oder geschätzten Hintergrundgeräusch sind.

Erfindungsgemäß werden die anderen Fahrzeugsitze durch interferierende bzw. auslöschende oder überdeckende Signale aus der Kommunikation entbunden. Hierdurch lässt sich eine Art Geheim-Modus betreiben, d.h. zwei Personen können sich in dem Kraftfahrzeug unterhalten, ohne dass die anderen mithören können. Gegebenenfalls noch vorhandenes Übersprechen zu den anderen Fahrzeugsitzen wird dann aktiv durch Abstrahlung von zum Übersprechen gegenphasigen Signalen ausgelöscht oder durch ein Einspielen von Hintergrundgeräuschen oder Musik überdeckt. Zur Verbesserung der Richtcharakteristik kann weiter ein Hochpassfilter in dem Audioprozessor bzw. in der Steuereinheit vorgesehen sein, mittels dem die schlechter zu richtenden tiefen Frequenzen herausgefiltert werden, so dass die Güte des Geheim-Modus weiter verbessert wird.

In einer bevorzugten Ausführungsform ist der jeweilige Richtlautsprecher als mindestens ein elektrostatischer Flächen-Lautsprecher ausgebildet. Dieser weist gegenüber herkömmlichen elektrodynamischen Lautsprechern den Vorteil auf, dass dieser äußerst flach ist und daher und aufgrund der verwendeten Materalien gut biegbar ist, wodurch die Einbindung in Kraftfahrzeugformteile vereinfacht wird. Des Weiteren ist die Abstrahlcharakteristik enger. Ein weiterer Vorteil ist, dass der nicht aktiv angesteuerte Flächen-Lautsprecher für hohe Frequenzen von beispielsweise größer 1kHz automatisch als Dämpfer wirkt und so störende Geräusche dämpft.

In einer weiteren bevorzugten Ausführungsform umfasst der elektrostatische Flächenlautsprecher mindestens zwei poröse Schichten, die elektrisch leitend oder an einer Seite metallisiert sind, wobei zwischen den porösen Schichten eine isolierte Kunststoffschicht angeordnet ist, die auf ein bestimmtes elektrisches Potenzial aufladbar ist und an bestimmten Stellen mit den porösen Schichten verbunden ist. Weiter vorzugsweise ist die Kunststoffschicht zweilagig ausgebildet, wobei zwischen den beiden Lagen eine metallische Beschichtung ist.

In einer weiteren Ausführungsform wird der jeweilige Richtlautsprecher aus mindestens zwei benachbarten Flächen-Lautsprechern gebildet, die mittels unterschiedlicher komplexer Übertragungsfunktionen zur Einstellung einer Abstrahlcharakteristik ansteuerbar sind. Hierdurch kann die Abstrahlcharakteristik insbesondere bei tiefen Frequenzen erheblich verbessert werden, da es ansonsten bei tiefen Frequenzen zu Nebenkeulen kommen kann, die zu einem Übersprechen zu benachbarten Fahrzeugsitzen führen würden. Mittels der komplexen Übertragungsfunktionen kann hingegen ein Richt-Lautsprecher über die gesamte Audio-Frequenz eingestellt werden. Dabei können die komplexen Übertragungsfunktionen fest eingestellt werden oder aber adaptiv geändert werden, um eine den jeweiligen Gegebenheiten angepasste Abstrahlcharakteristik hinsichtlich Öffnungswinkel und/oder Richtung einzustellen.

In einer bevorzugten Ausführungsform werden die verschiedenen Flächen-Lautsprecher konzentrisch umeinander angeordnet, so dass eine um die Abstrahlrichtung symmetrische Abstrahlcharakteristik einstellbar ist, die einen sehr geringen Öffnungswinkel aufweisen kann. Hierzu sind die Flächen-Lautsprecher entweder als Ringe ausgebildet oder als Rechtecke bzw. Quadrate, die umeinander angeordnet sind.

Alternativ können die Flächen-Lautsprecher streifenförmig nebeneinander angeordnet werden, so dass mindestens ein seitliches Übersprechen verhindert wird. Der Vorteil dieser Anordnung ist der einfache Aufbau.

In einer weiteren bevorzugten Ausführungsform ist das jeweilige Richtmikrofon als elektrostatisches Flächen-Mikrofon ausgebildet, wobei hinsichtlich der Vorteile auf die Ausführungen am Flächen-Lautsprecher Bezug genommen werden kann. Dabei kann eine vorteilhafte Eigenschaft der elektrostatischen Lautsprecher ausgenutzt werden, nämlich dass diese relativ einfach auch als Mikrofon betrieben werden können. Wird an die porösen Schichten keine Signalspannung aktiv angelegt, so führt eine Schallwelle zu einer Auslenkung der Kunststoffschicht, die eine Spannungsänderung an den Elektroden der porösen Schichten zur Folge hat, die als Signalspannung abgreifbar ist.

Aufgrund des Reziprozitätsthermes kann auch die Empfangscharakteristik des Richtmikrofons weiter dadurch verbessert werden, dass mehrere Flächen-Mikrofone verwendet werden, die mittels unterschiedlicher komplexer Empfangsfunktionen zur Einstellung einer Empfangscharakteristik ansteuerbar sind.

Weiter vorzugsweise werden dabei die Flächen-Mikrofone konzentrisch zueinander angeordnet.

In einer weiteren bevorzugten Ausführungsform können mindestens zwei nebeneinander angeordnete Flächen-Lautsprecher wahlweise als Stereo-Lautsprecher oder als Richtlautsprecher betrieben werden. Dabei kann der Nutzer auswählen, ob dieser beispielsweise bei Musikwiedergaben lieber einen Stereo-Klang haben möchte oder eine gute Richtcharakteristik, um die anderen Fahrzeuginsassen nicht zu stören.

In einer weiteren bevorzugten Ausführungsform sind die Richtmikrofone und/oder Richtlautsprecher in den Dachhimmel integriert.

In einer weiteren bevorzugten Ausführungsform sind die Richtmikrofone und/oder Richtlautsprecher mittels eines Wechselrahmens in den Dachhimmel integriert, wobei die beiden Panel-Seiten eines Richtlautsprechers und/oder Richtmikrofons gegebenenfalls unterschiedliche Motive aufweisen können. Dabei wird ausgenutzt, dass die elektrostatischen Panels symmetrisch aufgebaut sind. Mittels der unterschiedlichen Motive kann beispielsweise ein Motiv an den Dachhimmel angepasst sein, wohingegen das andere Motiv ein Kinder-Dekor aufweist.

In einer weiteren bevorzugten Ausführungsform ist der Dachhimmel selbst aus dem Panel-Material der Flächen-Lautsprecher und/oder Flächen-Mikrofone ausgebildet. Durch entsprechende Strukturierungen können dann Bereiche des Panels als Lautsprecher, Mikrofone oder Zuleitungen definiert werden. Hierdurch wird der Dachhimmel zu einem Multifunktionselement. Vorzugsweise wird dann die poröse Schicht als Isolator ausgebildet, die an der der Kunststoffschicht zugewandten Seite metallisiert ist. Hierdurch liegt an der der Fahrgastzelle zugewandten Seite des Dachhimmels keine Spannung an.

Bei der Realisierung eines akustischen Kanals wird vorzugsweise mittels der Steuereinheit oder einer geeigneten Sensorik ein Pegel von Umgebungsgeräuschen erfasst, wobei die Lautstärke und/oder der Frequenzgang der akustischen Signale der Richtlautsprecher im akustischen Kanal an den Pegel der Umgebungsgeräusche angepasst wird.

Die Erfindung wird nachfolgend anhand eines bevorzugten Ausführungsbeispieles näher erläutert. Die Fig. zeigen:

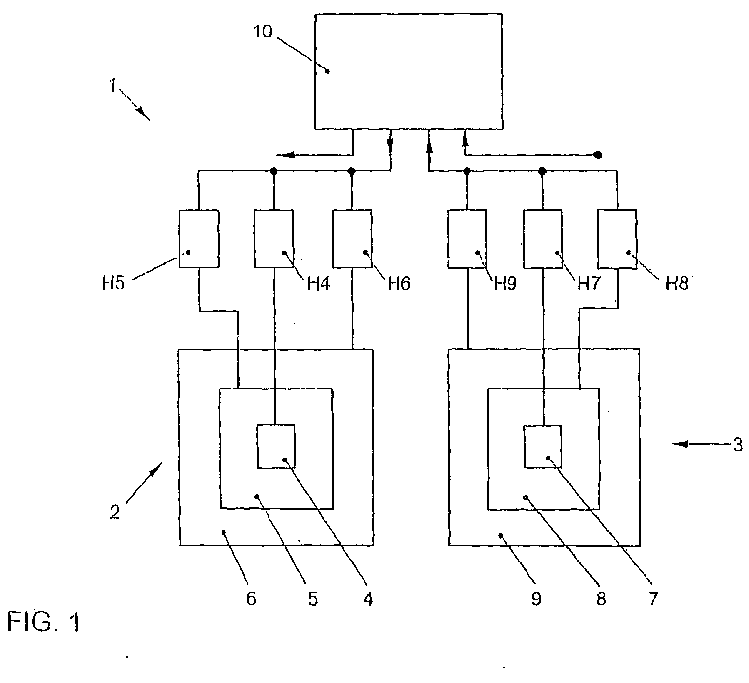

- Fig. 1: eine schematische Darstellung eines Richtlautsprechers und eines Richtmikrofons für einen Fahrzeugsitz,
- Fig. 2: eine schematische Darstellung der akustischen Verteilung in einem ersten nicht erfindungsgemäßen Modus und
- Fig. 3: eine schematische Darstellung mit einem akustischen Kanal zwischen zwei Fahrzeugsitzen.

Die Vorrichtung 1 umfasst einen Richtlautsprecher 2 und ein Richtmikrofon 3. Der Richtlautsprecher 2 besteht aus drei elektrostatischen Flächen-Lautsprechern 4-6. Ebenso besteht das Richtmikrofon 3 aus drei elektrostatischen Flächen-Mikrofonen 7-9. Den Flächen-Lautsprechem 4-6 sind jeweils eine komplexe Übertragungsfunktion H4(f) - H6(f) zugeordnet. Entsprechend sind den Flächen-Mikrofonen 6-8 jeweils eine komplexe Empfangsfunktion H7(f)-H9(f) zugeordnet. Die jeweils drei Flächen-Lautsprecher 4-6 sowie Flächen-Mikrofone 7-9 sind konzentrisch zueinander angeordnet. Des Weiteren umfasst die Vorrichtung 1 einen Audio-Prozessor 10. Über die komplexen Übertragungsfunktionen H4(f)-H6(f) kann nun ein Beamforming erreicht werden, so dass Nebenkeulen des Richtlautsprechers 2 minimiert werden. Entsprechendes gilt für Empfangsfunktionen H7(f)-H9(f) des Richtmikrofons 3. Diese werden nun so gewählt, dass sich bezogen auf den zugeordneten Fahrzeugsitz eine sehr schmale Hauptkeule für die Abstrahl- bzw. Empfangscharakteristik ergibt. Wie durch die weiteren Ein- bzw. Ausgänge am Audio-Prozessor 10 angedeutet, sind parallel weitere Richtlautsprecher und Richtmikrofone angesteuert, die anderen Fahrzeugsitzen zugeordnet sind. Der Audio-Prozessor stellt dabei auch eine Steuereinheit für die Richtlautsprecher bzw. Richtmikrofone dar. Bei einer Ausbildung als Freisprecheinrichtung umfasst die Vorrichtung ein Telekommunikationsmodul, das beispielsweise als GSM-Modul ausgebildet ist und mit dem Audio-Prozessor 10 verbunden ist, wobei der Audio-Prozessor auch in dem Telekommunikationsmodul integriert sein kann. Die weiteren Fahrzeugsitze können dann entweder ebenfalls in die Fernsprechverbindung eingebunden werden oder aber über deren Richtlautsprecher wird ein interferierendes Signal oder ein zusätzliches Signal, wie beispielsweise Musik, eingespielt.

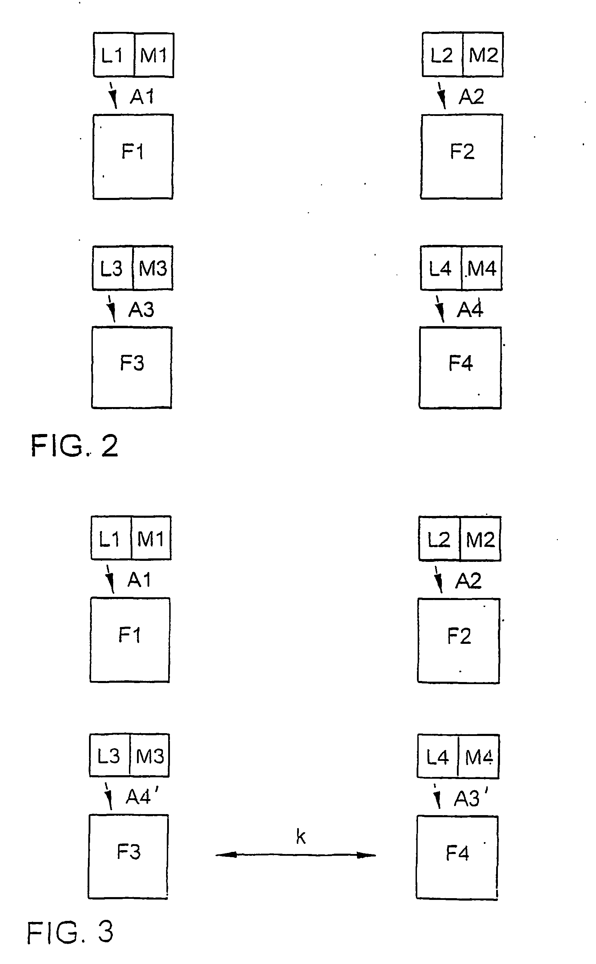

In der Fig. 2 ist eine Anordnung gezeigt, bei der jedem Fahrzeugsitz F1-F4 jeweils ein Richtlautsprecher L1-L4 sowie ein Richtmikrofon M1-M4 zugeordnet ist. Da durch die Richtlautsprecher L1-L4 das Übersprechen zu den jeweils anderen Fahrzeugsitzen sehr gering ist, kann jedem Fahrzeugsitz F1-F4 ein individuelles Audio-Signal A1-A4 über die Richtlautsprecher zugeführt werden, ohne dass diese sich gegenseitig stören. So können beispielsweise über den Richtlautsprecher L1 Informationen eines Navigationssystems angegeben werden, während die anderen Richtlautsprecher L2-L4 Musik und/oder Hörspiele wiedergeben. Zur weiteren Verringerung des Übersprechens können die einzelnen Richtlautsprecher L1-L4 zusätzlich interferierende Signale abstrahlen, die jeweils gegenphasig zum Übersprechen sind. So kann beispielsweise der nicht dargestellte Audio-Prozessor abschätzen, welches Übersprechen die Richtlautsprecher L2-L4 auf dem Fahrzeugsitz F1 erzeugen. Hierzu werden beispielsweise vorab Übertragungsfunktionen zwischen den einzelnen Fahrzeugsitzen F1-F4 bestimmt und abgespeichert. Da der Audio-Prozessor die einzelnen Audio-Signale A1-A4 erkennt, kann dann das jeweilige Übersprechen bestimmt werden. Entsprechend kann diese Bestimmung online erfolgen, indem über die Richtmikrofone M1-M4 das Übersprechen erfasst wird.

In der Fig. 3 ist die Realisierung eines akustischen Kanals K zwischen den Fahrzeugsitzen F3 und F4 dargestellt. Dabei sollen zwei Modi unterschieden werden, nämlich ein nicht erfindungsgemäßer Dialog-Modus und ein erfindungsgemäßer "Geheim-Modus".

Der Aufbau eines akustischen Kanals kann durch verschiedene Ereignisse initiiert werden, beispielsweise durch eine Eingabe oder durch eine automatische Erkennung eines begonnenen Dialogs zwischen zwei Fahrzeugsitzen. Das Grundprinzip des akustischen Kanals K ist, dass die akustischen Signale am Fahrzeugsitz F3 durch das Richtmikrofon M3 aufgenommen werden und durch den Richtlautsprecher L4 als Audio-Signal A3' ausgegeben wird und umgekehrt. Die beiden anderen Fahrzeugsitze F1 und F2 erhalten dabei die Audio-Signale A1 und A2, beispielsweise Musik. Allerdings müssen keine Audio-Signale A1 und A2 abgestrahlt werden. Zur Verbesserung der akustischen Qualität des akustischen Kanals K kann weiter vorgesehen sein, das das Übersprechen von den Fahrzeugsitzen F1 und F2 zu den Fahrzeugsitzen F3 und F4 bestimmt wird und jeweils ein zusätzlich das Übersprechen kompensierendes gegenphasiges Übersprechsignal über die Richtlautsprecher L3 und L4 angegeben wird. Alternativ oder ergänzend können die tiefen Frequenzen bis beispielsweise 200 Hz aus dem akustischen Kanal herausgefiltert werden.

In dem bereits erwähnten Geheim-Modus wird nun zusätzlich zu dem beschriebenen akustischen Kanal K noch sichergestellt, dass kein Übersprechen von den Fahrzeugsitzen F3 und F4 zu den Fahrzeugsitzen F1 und F2 erfolgt. Hierzu gilt wieder die Möglichkeit, das Übersprechen zu bestimmen oder abzuschätzen, wobei dann über die Richtlautsprecher L1, L2 jeweils gegenphasige Signale zu dem Übersprechen abgestrahlt werden. Alternativ oder ergänzend können Musik oder verstärkte Hintergrundgeräusche abgestrahlt werden, die dann das Übersprechen überdecken. Zur Optimierung dieses Geheim-Modus wird zunächst ein Audio-Signal am Fahrzeugsitz F3 durch das Richtmikrofon M3 aufgenommen. Dieses Audio-Signal wird dann verstärkt über L3 und mit einer angepassten Lautstärke über L4 ausgegeben. Durch die eigene laute Stimme wird der Fahrzeuginsasse auf dem Fahrzeugsitz F3 zum leiser Sprechen angehalten, wohingegen der Fahrzeuginsasse auf dem Fahrzeugsitz F4 zum Flüstern angeregt wird. Die übertragung vom Fahrzeugsitz F4 zum Fahrzeugsitz F3 erfolgt entsprechend. Die Pegel für die Verstärkung bzw. angepasste Lautstärke werden dabei im Verhältnis zu den Hintergrundgeräuschen eingestellt, so dass ein entspannter geheimer Dialog stattfinden kann, der nicht belauscht werden kann. Vorzugsweise wird daher der Pegel der Hintergrundgeräusche gemessen und die Faktoren relativ zu dem Pegel eingestellt. Weiter können dabei auch die Abstände zwischen dem Richtlautsprecher, Richtmikrofon und Person mitberücksichtigt werden. Des Weiteren können wieder die tiefen Frequenzen bis ca. 200 Hz herausgefiltert werden.

## Patentansprüche

1. Vorrichtung zur akustischen Kommunikation und/oder Wahrnehmung in einem Kraftfahrzeug, umfassend mehrere Fahrzeugsitze (F1-F4), denen jeweils ein Mikrofon und ein Lautsprecher zugeordnet sind, wobei die Mikrofone als Richtmikrofone (3, M1-M4) und die Lautsprecher als Richtlautsprecher (2, L1-L4)) ausgebildet sind, die durch eine Steuereinheit ansteuerbar sind, dass eine Kommunikation zwischen einzelnen Fahrzeug sitzen (F3, F4) unterstützt wird, wobei die Steuereinheit derart ausgebildet ist, dass diese einen akustischen Kanal (K) zwischen zwei Fahrzeugsitzen (F3, F4) einstellt und die anderen Fahrzeugsitze (F1, F2) aus der Kommunikation entbindet, wobei unter einem akustischen Kanal verstanden wird, dass die von einem Richtmikrofon (3, M3) eines ersten Fahrzeugsitzes (F3) aufgenommenen Signale nur über einen Richtlautsprecher (2, L4) eines zweiten Fahrzeugsitzes (F4) abgestrahlt werden und umgekehrt,
**dadurch gekennzeichnet, dass**
die Steuereinheit weiter derart ausgebildet ist, dass des Entbinden der anderen Fahrzeugsitze (F1, F2) aus der Kommunikation durch interferierende oder überdeckende Signale geschieht, und die akustischen Signale a dem ersten in dem akustischen Kanal (K) eingebundenen Fahrzeugsitz (F3) durch das diesem ersten Fahrzeugsitz (F3) zugeorndete Richtmikrofon (M3) aufgenommen und verstärkt über den dem ersten Fahrzeugsitz (F3) zugeordneten Richtlautsprecher (L3) abgestrahlt werden und mit angepasster Lautstärke über den Richtlautsprecher (L4) des zweiten in dem akustischen Kanal (K) eingebundenen Fahrzeugsitz (F4) abgestrahlt werden und umgekehrt.

2. Vorrichtung nach Anspruch 1, **dadurch gekennzeichnet, dass** der jeweilige Richtlautsprecher (2, L1-L4) als mindestens ein elektrostatischer Flächen-Lautsprecher (4-6) ausgebildet ist.

3. Vorrichtung nach Anspruch 2, **dadurch gekennzeichnet, dass** der elektrostatische Flächen-Lautsprecher (4-6) mindestens zwei poröse Schichten umfasst, die elektrisch leitend oder an einer Seite metallisiert sind, wobei zwischen den porösen Schichten eine isolierte Kunststoffschicht angeordnet ist, die auf ein bestimmtes elektrisches Potenzial aufladbar ist und an bestimmten Stellen mit den porösen Schichten verbunden ist.

4. Vorrichtung nach Anspruch 3, **dadurch gekennzeichnet, dass** die Kunststoffschicht zweilagig ausgebildet ist, wobei zwischen den beiden Lagen eine metallische Beschichtung ist.

5. Vorrichtung nach einem der Ansprüche 2 bis 4, **dadurch gekennzeichnet, dass** der jeweilige Richtlautsprecher (2) aus mindestens zwei benachbarten Flächen-Lautsprechem (4-6) gebildet ist, die mittels unterschiedlicher komplexer Übertragungsfunktionen (H4-H6) zur Einstellung einer Abstrahlcharakteristik ansteuerbar sind.

6. Vorrichtung nach Anspruch 5, **dadurch gekennzeichnet, dass** die Flächen-Lautsprecher (4-6) konzentrisch zueinander oder streifenförmig nebeneinander angeordnet sind.

7. Vorrichtung nach einem der Ansprüche 5 oder 6, **dadurch gekennzeichnet, dass** die mindestens zwei nebeneinander angeordneten Flächen-Lautsprecher (4-6) wahlweise als Stereo-Lautsprecher oder als Richtlautsprecher (2) betreibbar sind.

8. Vorrichtung nach einem der vorangegangenen Ansprüche, **dadurch gekennzeichnet, dass** das jeweilige Richtmikrofon (3) als elektrostatisches Flächen-Mikrofon (7-9) ausgebildet ist.

9. Vorrichtung nach Anspruch 8, **dadurch gekennzeichnet, dass** das jeweilige Richtmikrofon aus mindestens zwei benachbarten elektrostatischen Flächen-Mikrofonen (7-9) gebildet ist, die mittels unterschiedlicher komplexer Empfangsfunktionen (H7-H9) zur Einstellung einer Empfangscharakteristik ansteuerbar sind.

10. Vorrichtung nach Anspruch 9, **dadurch gekennzeichnet, dass** die Flächen-Mikrofone (7-9) konzentrisch zueinander angeordnet sind.

11. Vorrichtung nach einem der vorangegangenen Ansprüche, **dadurch gekennzeichnet, dass** die Richtmikrofone (3) und/oder Richtlautsprecher (2) in dem Dachhimmel integriert sind.

12. Vorrichtung nach Anspruch 11, **dadurch gekennzeichnet, dass** die Richtmikrofone (3) und/oder Richtlautsprecher (2) mittels eines Wechselrahmens in dem Dachhimmel integriert sind, wobei die Richtmikrofone (3) und/oder Richtlautsprecher (2) jeweils zwei Panel-Seiten aufweisen und die beiden Panel-Seiten eines Richtlautsprechers (2) und/oder Richtmikrofons (3) unterschiedliche Motive aufweisen.

13. Vorrichtung nach Anspruch 11, **dadurch gekennzeichnet, dass** der Dachhimmel aus Panel-Material der elektrostatischen Flächen-Lautsprecher (4-6) und/oder -Mikrofone (7-9) ausgebildet ist.

## Claims

1. Apparatus for audible communication and/or perception in a motor vehicle, comprising a plurality of vehicle seats (F1-F4), each of which has an associated microphone and loudspeaker, wherein the microphones are in the form of directional microphones (3, M1-M4) and the loudspeakers are in the form of directional loudspeakers (2, L1-L4), which can be driven by a control unit, so that communication between individual vehicle seats (F3, F4) is supported, wherein the control unit is in a form such that it adjusts an audio channel (K) between two vehicle seats (F3, F4) and releases the other vehicle seats (F1, F2) from the communication, wherein an audio channel is understood to mean that the signals picked up by a directional microphone (3, M3) for a first vehicle seat (F3) are radiated only via a directional loudspeaker (2, L4) for a second vehicle seat (F4), and vice versa,
**characterized in that**
the control unit is also in a form such that the other vehicle seats (F1, F2) are released from the communication by interfering or masking signals, and the audible signals at the first vehicle seat (F3) incorporated in the audio channel (K) are picked up by the directional microphone (M3) associated with this first vehicle seat (F3) and are radiated in amplified form via the directional loudspeaker (L3) associated with the first vehicle seat (F3) and are radiated at customized volume via the directional loudspeaker (L4) of the second vehicle seat (F4) incorporated in the audio channel (K), and vice versa.

2. Apparatus according to Claim 1, **characterized in that** the respective directional loudspeaker (2, L1-L4) is in the form of at least one electrostatic flat-surface loudspeaker (4-6).

3. Apparatus according to Claim 2, **characterized in that** the electrostatic flat-surface loudspeaker (4-6) comprises at least two porous layers which are electrically conductive or are metallized on one side, wherein the porous layers have an insulated plastic layer arranged between them which can be charged to a particular electrical potential and has particular locations connected to the porous layers.

4. Apparatus according to Claim 3, **characterized in that** the plastic layer is in two-ply form, wherein the two plies have a metal coating between them.

5. Apparatus according to one of Claims 2 to 4, **characterized in that** the respective directional loudspeaker (2) is formed from at least two adjacent flat-surface loudspeakers (4-6) which can be driven by means of various complex transmission functions (H4-H6) to adjust a radiation characteristic.

6. Apparatus according to Claim 5, **characterized in that** the flat-surface loudspeakers (4-6) are arranged concentrically with respect to one another or in strip form next to one another.

7. Apparatus according to one of Claims 5 and 6, **characterized in that** the at least two flat-surface loudspeakers (4-6) arranged next to one another can be selectively operated as stereo loudspeakers or as directional loudspeakers (2).

8. Apparatus according to one of the preceding claims, **characterized in that** the respective directional microphone (3) is in the form of an electrostatic flat-surface microphone (7-9).

9. Apparatus according to Claim 8, **characterized in that** the respective directional microphone is formed from at least two adjacent electrostatic flat-surface microphones (7-9) which can be driven by means of various complex reception functions (H7-H9) to adjust a reception characteristic.

10. Apparatus according to Claim 9, **characterized in that** the flat-surface microphones (7-9) are arranged concentrically with respect to one another.

11. Apparatus according to one of the preceding claims, **characterized in that** the directional microphones (3) and/or directional loudspeakers (2) are integrated in the roof lining.

12. Apparatus according to Claim 11, **characterized in that** the directional microphones (3) and/or directional loudspeakers (2) are integrated in the roof lining by means of a clip-on frame, wherein the directional microphones (3) and/or directional loudspeakers (2) each have two panel sides and the two panel sides of a directional loudspeaker (2) and/or directional microphone (3) have various motifs.

13. Apparatus according to Claim 11, **characterized in that** the roof lining is formed from panel material for the electrostatic flat-surface loudspeakers (4-6) and/or microphones (7-9).

## Revendications

1. Dispositif de communication et/ou de perception acoustique dans un véhicule automobile, comprenant plusieurs sièges de véhicule (F1 - F4), auxquels sont respectivement affectés un microphone et un haut-parleur, les microphones étant conçus sous la forme de microphones directionnels (3, M1 - M4) et les haut-parleurs sous la forme de haut-parleurs directionnels (2, L1 - L4), pouvant être commandés au moyen d'une unité de commande, de façon à favoriser une communication entre des sièges individuels de véhicule (F3, F4), l'unité de commande étant conçue de telle sorte que celle-ci établit un canal acoustique (K) entre deux sièges de véhicule (F3, F4) et élimine les autres sièges de véhicule (F1, F2) de la communication, étant entendu que sous canal acoustique, on entend que les signaux enregistrés par un microphone directionnel (3, M3) d'un premier siège de véhicule (F3) ne peuvent être diffusés que par l'intermédiaire d'un haut-parleur directionnel (2, L4) d'un deuxième siège de véhicule (F4) et inversement,
**caractérisé en ce que** l'unité de commande est de plus conçue de telle sorte que l'élimination des autres sièges de véhicule (F1, F2) de la communication s'effectue au moyen de signaux d'interférence ou couvrants, et les signaux acoustiques enregistrés et amplifiés au premier siège de véhicule (F3) intégré dans le canal acoustique (K) par le microphone directionnel (M3) affecté à ce premier siège de véhicule (F3) sont diffusés par l'intermédiaire du haut-parleur directionnel (L3) affecté au premier siège de véhicule (F3) et sont diffusés avec un niveau sonore adapté par l'intermédiaire du haut-parleur directionnel (L4) du deuxième siège de véhicule (F4) intégré dans le canal acoustique (K) et inversement.

2. Dispositif selon la revendication 1, **caractérisé en ce que** le haut-parleur directionnel respectif (2, L1 - L4) est conçu sous la forme d'au moins un haut-parleur électrostatique de surface (4 - 6).

3. Dispositif selon la revendication 2, **caractérisé en ce que** le haut-parleur électrostatique de surface (4 - 6) comporte au moins deux couches poreuses électriquement conductrices ou métallisée à un endroit, une couche de matière plastique isolée étant disposée entre les couches poreuses et pouvant être chargée à un potentiel électrique défini et étant reliée à des endroits définis aux couches poreuses.

4. Dispositif selon la revendication 3, **caractérisé en ce que** la couche de matière plastique est conçue sous la forme d'une double couche, un revêtement métallique se trouvant entre les deux couches.

5. Dispositif selon une des revendications 2 à 4, **caractérisé en ce que** le haut-parleur directionnel respectif (2) est constitué d'au moins deux haut-parleurs de surface voisins (4 - 6), pouvant être commandés au moyen de diverses fonctions complexes de transmission (H4 - H6) pour le réglage d'une caractéristique de rayonnement.

6. Dispositif selon la revendication 5, **caractérisé en ce que** les haut-parleurs de surface (4 - 6) sont disposés de manière mutuellement concentrique ou côte à côte sous forme de bande.

7. Dispositif selon une des revendications 5 ou 6, **caractérisé en ce que** les deux haut-parleurs de surface (4 - 6) au moins, disposés côte à côte, peuvent être exploités au choix comme haut-parleurs stéréophoniques ou comme haut-parleurs directionnels (2).

8. Dispositif selon une des revendications précédentes, **caractérisé en ce que** le microphone directionnel respectif (3) est conçu sous la forme de microphone électrostatique de surface (7 - 9).

9. Dispositif selon la revendication 8, **caractérisé en ce que** le microphone directionnel respectif est constitué d'au moins deux microphones électrostatiques de surface voisins (7 - 9), pouvant être commandés au moyen de diverses fonctions complexes de réception (H7 - H9) pour le réglage d'une caractéristique de réception.

10. Dispositif selon la revendication 9, **caractérisé en ce que** les microphones de surface (7 - 9) sont disposés de manière mutuellement concentrique.

11. Dispositif selon une des revendications précédentes, **caractérisé en ce que** les microphones directionnels (3) et/ou les haut-parleurs directionnels (2) sont intégrés dans l'intérieur du pavillon.

12. Dispositif selon la revendication 11, **caractérisé en ce que** les microphones directionnels (3) et/ou les haut-parleurs directionnels (2) sont intégrés dans l'intérieur du pavillon au moyen d'un cadre amovible, les microphones directionnels (3) et/ou les haut-parleurs directionnels (2) comportant respectivement deux côtés de panneau et les deux côtés de panneau d'un haut-parleur directionnel (2) et/ou d'un microphone directionnel (3) comportant divers motifs.

13. Dispositif selon la revendication 11, **caractérisé en ce que** l'intérieur du pavillon est conçu dans du matériau des panneaux des haut-parleurs électrostatiques de surface (4 - 6) et/ou des microphones électrostatiques de surface (7 - 9).
